# EUROPÄISCHE PATENTANMELDUNG

(11) **EP 4 123 331 A1**
(43) Veröffentlichungstag der Anmeldung: **25.01.2023**
(21) Anmeldenummer: 21186767.6
(22) Anmeldetag: 20.07.2021
(51) Int. Cl.: G01S 5/02, G01S 5/06, G01S 5/14

(54) **VERFAHREN ZUM BETRIEB EINES FUNKORTUNGSSYSTEMS, FUNKORTUNGSSYSTEM, BASISSTATION UND TRANSPONDER**

(71) Anmelder: Siemens Aktiengesellschaft, 80333 München (DE)
(72) Erfinder: Hladik, Reinhard, 1210 Wien (AT); Schubert, Alexander, 09376 Oelsnitz (DE); Kardi, Yasmin, 04109 Leipzig (DE)

(57) **Zusammenfassung**

Die Erfindung betrifft ein Funkortungssystems mit mehreren Basisstationen, mittels derer Positionen von Transpondern ermittelt werden, wobei ein Versenden von Funknachrichten der Basisstationen und der Transponder mittels eines Zeitmultiplexverfahrens koordiniert wird, das jeder Basisstation und jedem Transponder einen festen Zeitabschnitt zum Versenden der jeweiligen Funknachrichten zuteilt. Ein Versenden der Funknachrichten (1, 2) durch die Transponder wird jeweils derart gesteuert, dass ein frühester Sendezeitpunkt einer Marke (Δ1, Δ2), die jeweils zwischen einer Präambel (11, 21) und einem Nutzdatenbereich (13, 23) jeder Funknachricht vorgesehen ist, durch einen Startzeitpunkt des jeweiligen Zeitabschnitts vorgegeben wird. Die Sendezeitpunkte der Funknachrichten durch die Transponder werden jeweils entsprechend einem aus einem Geheimnis abgeleiteten, durch die Basisstationen überprüfbaren Muster verzögert.

## Beschreibung

Die vorliegende Erfindung betrifft ein Verfahren zum Betrieb eines Funkortungssystems, insbesondere eines Real-time Locating System (RTLS), ein Funkortungssystem zur Durchführung des Verfahrens sowie eine Basisstation und einen Transponder für ein solches Funkortungssystem.

Funkbasierte Ortungsvorrichtungen können beispielsweise auf RFID-Tags (radio-frequency identification) basieren, die zur Identifizierung oder Ortung von Gegenständen an diesen jeweils angebracht werden. RFID-Tags umfassen eine Speichereinheit, deren Inhalt mittels eines RFID-Lesegeräts ausgelesen, aber auch verändert werden kann. Üblicherweise ist in RFID-Tags jeweils zumindest ein Identifikator gespeichert. Zum Auslesen von in RFID-Tags gespeicherten Informationen senden RFID-Lesegeräte jeweils durch Erzeugung eines elektro-magnetischen Wechselfeldes ein Anfragesignal aus. Einerseits dient dieses elektro-magnetische Wechselfeld zur Energieversorgung insbesondere passiv betriebener RFID-Tags, die keine eigene Energiequelle aufweisen. Andererseits wird das elektro-magnetische Wechselfeld durch RFID-Tags zur Übermittlung eines Antwortsignals moduliert, beispielsweise durch Lastmodulation oder Variierung ihrer Antennenimpedanz.

Funkortungssysteme für industrielle Automatisierungssysteme müssen besonderen Anforderungen hinsichtlich zuverlässiger Datenübermittlung, Authentizität übermittelter Daten und Unempfindlichkeit gegenüber Störquellen genügen. Da industrielle Automatisierungssysteme zur Überwachung, Steuerung und Regelung von technischen Prozessen dienen, insbesondere im Bereich Fertigungs-, Prozess- und Gebäudeautomatisierung, können gestörte, manipulierte oder fehlerhaft konfigurierte Funkortungssysteme zu schwerwiegenden Auswirkungen führen, im ungünstigsten Fall zu einem Stillstand eines Automatisierungssystems.

In EP 3 031 039 A1 ist ein RFID-basiertes Positionserfassungssystem mit einem an einem zu erfassenden Objekt angebrachten RFID-Tag beschrieben, das mittels eines niederfrequenten Wecksignals aus einem Niedrigenergiemodus geweckt werden kann. Das Wecksignal umfasst Positionsinformationen, die einem das RFID-Tag mittels des Wecksignals erfassenden RFID-Lesegerät zugeordnet sind. Nach Aufwecken des RFID-Tags durch Empfang des Wecksignals erzeugt das RFID-Tag ein hochfrequentes Antwortsignal, das einen Identifizierungscode des RFID-Tags und die mittels des Wecksignals übermittelten Positionsinformationen umfasst.

EP 3 599 573 B1 betrifft ein Verfahren zur Datenübermittlung zwischen einem Funk-Transponder-Lesegerät und einem Funk-Transponder, bei dem eine Steuerungseinheit des Funk-Transponders zur Erzeugung eines Antwortsignals eine Veränderung einer Lastimpedanz durch ein Steuerungssignal steuert, das eine ausgewählte Schaltimpulsfrequenz und eine ausgewählte Schaltimpulsanzahl aufweist. Die Steuerungseinheit codiert mehrwertige zumindest ternäre Symbole in das Steuerungssignal. Symbolwerte werden jeweils zu Schaltimpulsfolgen zugeordnet, die jeweils eine eindeutige Kombination aus Schaltimpulsfrequenz, Schaltimpulszahl und Phasenverschiebung aufweisen. Dabei werden nur Kombinationen ausgewählt, deren Quotient aus Schaltimpulszahl und Schaltimpulsfrequenz innerhalb eines vorgegebenen Wertbereichs liegt.

Aus der älteren europäischen Patentanmeldung mit dem Anmeldeaktenzeichen 20183193.0 ist ein Funkortungssystem bekannt, bei dem eine Position eines Transponders mittels mehrerer Basisstationen des Funkortungssystems anhand von Funksignal-Empfangszeitdifferenzen in einem ersten Betriebsmodus oder anhand von Funksignal-Laufzeiten in einem zweiten Betriebsmodus ermittelt wird. Zur Ermittlung seiner Position sendet der Transponder per Broadcast eine Nachricht an die Basisstationen. Die Nachricht empfangende Basisstationen ermitteln jeweils eine Empfangssignalstärke eines zur Übermittlung der Nachricht verwendeten Transpondersignals. Eine Auswertevorrichtung ermittelt eine Anzahl der Basisstationen, die das Transpondersignal mit einer über einer vorgegebenen Mindestsignalstärke liegenden Empfangssignalstärke empfangen haben und versetzt die Basisstationen dementsprechend in den ersten oder in den zweiten Betriebsmodus.

In der älteren europäischen Patentanmeldung mit dem Anmeldeaktenzeichen 21176824.7 ist ein Verfahren zur Lokalisierung eines Transponders beschrieben, bei dem eine Position eines Transponders mittels mehrerer Basisstationen des Funkortungssystems anhand von Funksignal-Laufzeiten ermittelt wird. Eine Master-Basisstation sendet eine erste kryptgraphisch gesicherte Information an den Transponder. Der Transponder antwortet bei korrektem Empfang der ersten kryptographisch gesicherten Information innerhalb einer vorgegebenen Zeitdauer ab Empfang mit einer zweiten kryptographisch gesicherten Information an die Basisstationen. Die Master-Basisstation berechnet die Position des Transponders anhand ermittelter Signallaufzeiten als Schnittpunkt eines Kreises um die Master-Basisstation mit Ellipsen um die Slave-Basisstationen.

Zur zeitlichen Koordination von mehreren Teilnehmern, insbesondere Basisstationen und Transpondern, in einem Funkortungssystem versendeter Funknachrichten kann beispielsweise Time Division Multiple Access (TDMA) als Zeitmultiplexverfahren verwendet werden. Bei TDMA-Systemen werden Funknachrichten in einer zeitlichen Superframe-Struktur gesendet. Jedem Teilnehmer wird ein fester TDMA-Slot innerhalb des Superframes zugewiesen. Auf diese Art und Weise wird sichergestellt, dass niemals zwei Funknachrichten zweier verschiedener Teilnehmer zum selben Zeitpunkt gesendet werden. Sollten zwei Funknachrichten zweier verschiedener Teilnehmer zum gleichen Zeitpunkt gesendet werden, kann zumindest eine der beiden Funknachrichten nicht erfolgreich empfangen werden. Üblicherweise können Empfangszeitstempel für kollidierende Funknachrichten beim Empfang nicht mehr korrekt erzeugt werden.

Darüber hinaus können Empfangszeitstempel für Funknachrichten manipuliert werden, indem Präambel-Symbole innerhalb der jeweiligen Funknachricht früher als planmäßig gesendet werden. Dies führt dazu, dass Funknachrichten mit manipulierten Präambel-Symbolen gegenüber zu Funknachrichten mit unmanipulierten Präambel-Symbolen empfängerseitig vorzeitig für eine Erzeugung eines jeweiligen Empfangszeitstempels verarbeitet werden. Wenn nicht alle Teilnehmer in einem Funknetzwerk ihre Sendevorgänge im zugewiesenen TDMA-Slot durchführen, sondern ihre Sendezeitpunkte - fehlerhaft oder manipulativ - unabhängig davon wählen, oder wenn TDMA-Zeitslots fehlerhaft doppelt durch unterschiedliche Teilnehmer belegt werden, ergeben sich ebenfalls entsprechende Probleme.

Der vorliegenden Erfindung liegt daher die Aufgabe zugrunde, ein Verfahren zum sicheren Betrieb eines Funkortungssystems, in dem ein Zeitmultiplexverfahren genutzt wird, zu schaffen, das eine durch Fehler oder Manipulationsversuche bedingte Erzeugung von inkorrekten Empfangszeitstempeln verhindert, sowie zur Durchführung des Verfahrens geeignete Mittel bzw. Realisierungen anzugeben.

Diese Aufgabe wird erfindungsgemäß durch ein Verfahren mit den in Patentanspruch 1 angegebenen Merkmalen, ein Funkortungssystem mit den in Patentanspruch 10 angegebenen Merkmalen, durch eine Basisstation mit den in Patentanspruch 11 angegebenen Merkmalen und durch einen Transponder mit den in Patentanspruch 12 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zum Betrieb eines Funkortungssystems werden Positionen von Transpondern bzw. Tags mittels mehrerer Basisstationen bzw. Anker des Funkortungssystems ermittelt. Die Basisstationen sind jeweils an einer vorgegebenen Position angeordnet. Ein Versenden von Funknachrichten der Basisstationen und der Transponder wird mittels eines Zeitmultiplexverfahrens koordiniert. Dabei teilt das Zeitmultiplexverfahren jeder Basisstation und jedem Transponder einen festen Zeitabschnitt zum Versenden der jeweiligen Funknachrichten zu. Das Funkortungssystem ist vorzugsweise ein zumindest UWB-basiertes bzw. 2,4 GHz ISM-Band-basiertes Real-time Locating System.

Erfindungsgemäß wird ein Versenden der Funknachrichten durch die Transponder jeweils derart gesteuert, dass ein frühester Sendezeitpunkt einer Marke, die jeweils zwischen einer Präambel und einem Nutzdatenbereich jeder Funknachricht vorgesehen ist, durch einen Startzeitpunkt des jeweiligen Zeitabschnitts vorgegeben wird. Die Sendezeitpunkte ihrer Funknachrichten werden durch die Transponder jeweils entsprechend einem aus einem Geheimnis abgeleiteten, durch die Basisstationen überprüfbaren Muster verzögert. Dementsprechend überprüfen die Basisstationen auf Basis des jeweiligen frühesten Sendezeitpunkts, des Musters und einer abstandsbedingten Signallaufzeit jeweils bei einem Empfang einer Funknachricht eines Transponders, ob ein Senden der Funknachricht entsprechend dem Muster verzögert worden ist. Bei einer Abweichung vom Muster wird jeweils eine Sicherheitsmaßnahme eingeleitet. Die Sicherheitsmaßnahme umfasst vorteilhafterweise eine Signalisierung einer Warnung bzw. ein Verwerfen der jeweiligen Funknachricht. Das Muster kann anhand eines Geheimnisses in ähnlicher Weise erzeugt werden wie beispielsweise eine digitale Signatur mittels eines privaten Schlüssels erstellt wird. Analog zu einer Überprüfung der digitalen Signatur mittels eines öffentlichen Schlüssels ist das aus einem Geheimnis abgeleitete Muster durch die Basisstationen überprüfbar.

Insgesamt ermöglicht die vorliegende Erfindung eine Nutzung von Zeitmultiplexverfahren in Funkortungssystemen sowie eine damit verbundene höhere Leistungsfähigkeit und bietet zugleich eine hinreichende Resistenz gegen Manipulationen des Zeitmultiplexverfahrens sowie gegen Systemfehler, insbesondere infolge doppelt belegter Zeitschlitze. Zudem erfordert die vorliegende Erfindung keine tiefgreifenden Hardware-Änderungen an bestehenden Funkortungssystemen, so dass eine Implementierung der vorliegenden Erfindung aufwandsarm umsetzbar ist.

Vorteilhafterweise wird das Versenden der Funknachrichten durch die Basisstationen mittels des Zeitmultiplexverfahrens koordiniert. Dabei wird als Zeitmultiplexverfahren vorzugsweise Time Division Multiple Access verwendet. Entsprechend einer weiteren bevorzugten Ausgestaltung der vorliegenden Erfindung wird zwischen zwei aufeinander folgenden Zeitabschnitten jeweils ein Schutzintervall vorgesehen. Die Sendezeitpunkte der Funknachrichten durch die Transponder können somit jeweils maximal um eine Länge eines Schutzintervalls verzögert werden. Innerhalb dieser Bandbreite kann das Muster variiert werden.

Die Positionen der Transponder können insbesondere anhand von Funknachrichten-Empfangszeitdifferenzen oder anhand von Funknachrichten-Laufzeiten ermittelt werden. Vorzugsweise werden die Positionen der Transponder entsprechend Time Difference of Arrival ermittelt, wobei die Basisstationen untereinander zeitsynchronisiert sind. Time Difference of Arrival ermöglicht eine gleichzeitige Ortung einer Vielzahl von Transpondern. Alternativ hierzu können die Positionen der Transponder entsprechend Two-way Ranging ermittelt werden. Dabei kann anstelle der Positionen der Transponder jeweils eine Entfernung eines Transponders zu zumindest einer Basisstation ermittelt werden. Damit ist eine besonders aufwandsarme Realisierung der vorliegenden Erfindung möglich. Dies gilt insbesondere für Anwendungsfällen, in denen aufgrund räumlicher Rahmenbedingungen, etwa an Zugangspforten, eine Ermittlung eines Abstands zu einer in einem Zugangsbereich installierten Basisstation ausreichend ist.

Das erfindungsgemäße Funkortungssystem ist zur Durchführung eines Verfahrens entsprechend vorangehenden Ausführungen vorgesehen und umfasst mehrere Transponder sowie mehrere jeweils an einer vorgegebenen Position angeordnete Basisstationen zur Ermittlung von Positionen der Transponder. Das Funkortungssystem ist dafür ausgestaltet, ein Versenden von Funknachrichten der Basisstationen und der Transponder mittels eines Zeitmultiplexverfahrens zu koordinieren. Dabei ist das Zeitmultiplexverfahren zur Zuteilung jeweils eines festen Zeitabschnitts an jede Basisstation und jeden Transponder zum Versenden der jeweiligen Funknachrichten vorgesehen.

Die Transponder des erfindungsgemäßen Funkortungssystems sind dafür ausgestaltet, ein Versenden der Funknachrichten jeweils derart zu steuern, dass ein frühester Sendezeitpunkt einer Marke, die jeweils zwischen einer Präambel und einem Nutzdatenbereich jeder Funknachricht vorgesehen ist, durch einen Startzeitpunkt des jeweiligen Zeitabschnitts vorgegeben wird. Ferner sind die Transponder dafür ausgestaltet, die Sendezeitpunkte der Funknachrichten jeweils entsprechend einem aus einem Geheimnis abgeleiteten, durch die Basisstationen überprüfbaren Muster zu verzögern.

Demgegenüber sind die Basisstationen des erfindungsgemäßen Funkortungssystems dafür ausgestaltet, auf Basis des jeweiligen frühesten Sendezeitpunkts, des Musters und einer abstandsbedingten Signallaufzeit bei einem Empfang einer Funknachricht eines Transponders jeweils zu überprüfen, ob ein Senden der Funknachricht entsprechend dem Muster verzögert worden ist. Dabei ist das Funkortungssystem ferner dafür ausgestaltet, bei einer Abweichung vom Muster jeweils eine Sicherheitsmaßnahme einzuleiten.

Die erfindungsgemäße Basisstation ist für ein Funkortungssystem entsprechend vorangehenden Ausführungen vorgesehen und dafür ausgestaltet, auf Basis eines jeweiligen frühesten Sendezeitpunkts einer Funknachricht eines Transponders, eines aus einem Geheimnis abgeleiteten Musters, entsprechend dem Sendezeitpunkte von Funknachrichten von Transpondern jeweils verzögert sind, und einer abstandsbedingten Signallaufzeit bei einem Empfang einer Funknachricht eines Transponders jeweils zu überprüfen, ob ein Senden der Funknachricht entsprechend dem Muster verzögert worden ist.

Der erfindungsgemäße Transponder ist für ein Funkortungssystem für ein Funkortungssystem entsprechend vorangehenden Ausführungen vorgesehen und dafür ausgestaltet, ein Versenden von Funknachrichten derart zu steuern, dass ein frühester Sendezeitpunkt einer Marke, die jeweils zwischen einer Präambel und einem Nutzdatenbereich jeder Funknachricht vorgesehen ist, durch einen Startzeitpunkt eines festen Zeitabschnitts, der dem Transponder zum Versenden von Funknachrichten mittels eines Zeitmultiplexverfahrens zugeteilt ist, vorgegeben wird. Außerdem ist der Transponder dafür ausgestaltet, die Sendezeitpunkte der Funknachrichten jeweils entsprechend einem aus einem Geheimnis abgeleiteten Muster zu verzögern.

Die vorliegende Erfindung wird nachfolgend an einem Ausführungsbeispiel anhand der Zeichnung näher erläutert. Es zeigt
- Figur 1: Funkortungssystem für ein industrielles Automatisierungssystem mit mehreren Basisstationen und Transpondern,
- Figur 2: eine schematische Darstellung eines Aufbaus von Funknachrichten innerhalb des Funkortungssystems gemäß Figur 1,
- Figur 3: eine Darstellung eines Musters, entsprechend dem Funknachrichten der Transponder verzögert gesendet werden.

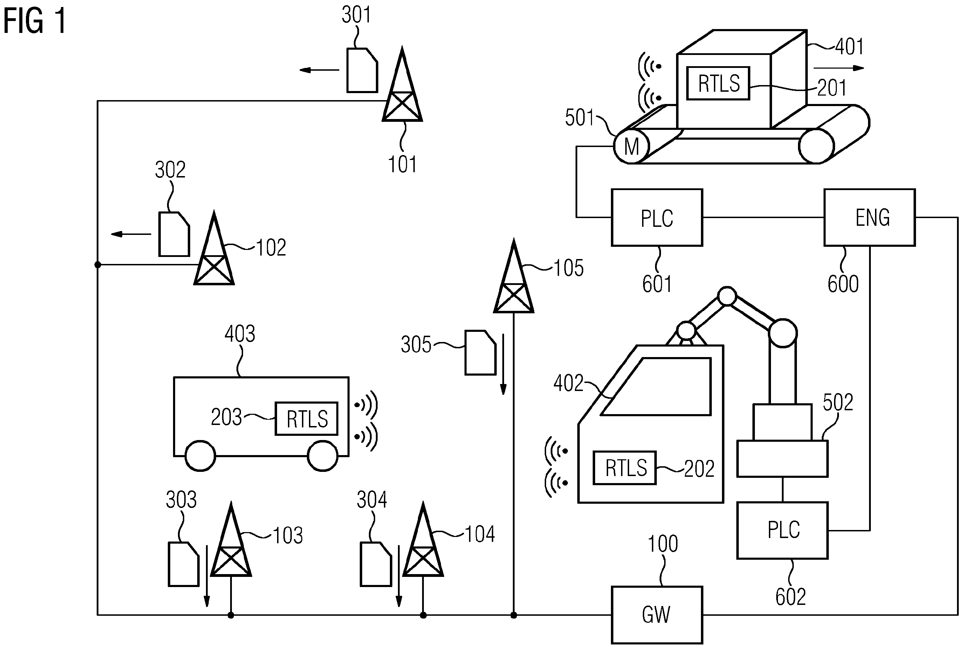

Das in Figur 1 dargestellte Funkortungssystem ist im vorliegenden Ausführungsbeispiel ein UWB- oder 2,4 GHz ISM-Band-basiertes Real-time Locating System (RTLS), das mehrere Basisstationen 101-105 umfasst, die jeweils an vorgegebenen bzw. bekannten Positionen angeordnet sind. Mittels der Basisstationen 101-105 werden anhand von Funksignal-Laufzeiten bzw. anhand von Funksignal-Empfangszeitdifferenzen Positionen von Transpondern 201-203 erfasst, die an zu ortenden Gegenständen angebracht sind.

Vorzugsweise werden die Positionen der Transponder 201-203 entsprechend Time Difference of Arrival (TDOA) ermittelt. In diesem Fall sind die Basisstationen 101-105 vorteilhafterweise untereinander zeitsynchronisiert. Details zur Positionsermittlung mittels TDOA sind beispielsweise in Wikipedia unter Multilateration (https://en.wikipedia.org/wiki/ Multilateration) beschrieben. Alternativ zu Time Difference of Arrival können die Positionen der Transponder 201-203 entsprechend Two-way Ranging (TWR) ermittelt werden. Insbesondere ist es dabei möglich, dass anstelle der Positionen der Transponder 201-203 jeweils eine Entfernung eines Transponders 201-203 zu zumindest einer Basisstation 101-105 ermittelt wird.

Mittels eines ersten Transponders 201 wird beispielsweise ein Stückgut 401 auf einem Transportband überwacht, dessen Antrieb 501 durch eine erste speicherprogrammierbare Steuerung 601 gesteuert wird. Ein zweiter Transponder 202 ist im vorliegenden Ausführungsbeispiel an einem Fahrzeugteil 402 befestigt, das in einer Fahrzeugfertigungslinie durch einen Roboter 502 transportiert und montiert wird. Der Roboter wird durch eine zweite speicherprogrammierbare Steuerung 602 gesteuert, die ebenso wie die erste speicherprogrammierbare Steuerung 601 mit einer zentralen Überwachungs- und Steuerungseinheit 600 verbunden ist. Durch die Überwachungs- und Steuerungseinheit 600 werden u.a. die speicherprogrammierbaren Steuerungen 601, 602 und das Funkortungssystem projektiert bzw. überwacht.

Das Funkortungssystem dient im vorliegenden Ausführungsbeispiel außerdem zur Überwachung der Position eines autonomen Fahrzeugs 403, mit denen Produktionsgüter zur Fahrzeugfertigungslinie transportiert werden. An dem autonomen Fahrzeug 403 ist zur Ortung ein dritter Transponder 203 angeordnet. Neben UWB- bzw. 2,4 GHz ISM-Band-Komponenten kann das Funkortungssystem beispielsweise zusätzliche Komponenten zur GPS-, WLAN- oder Inertialsensorik-basierten Ortung umfassen. Dabei können mehrere oder alle dieser Komponenten in die Transponder 201-203 und Basisstationen 101-105 des Funkortungssystems integriert sein.

Die Basisstationen 101-105 sind mit einer als Gateway 100 ausgestalteten Auswertevorrichtung des Funkortungssystems verbunden. Die Transponder 201-203 übermitteln vorzugsweise jeweils einen dem jeweils zu ortenden Gegenstand zugeordneten Objektidentifikator oder eine RTLS-Adresse des jeweiligen Transponders an die Basisstationen 101-105. Auf dieser Basis senden die Basisstationen 101-105 Datagramme 301-305, die insbesondere erfasste Signallaufzeitinformationen, Signalempfangszeitinformationen, Informationen über Signalempfangszeitdifferenzen bzw. Signalstärkemesswerte von empfangenen Transpondersignalen bzw. Objektidentifikatoren umfassen, zur Auswertung an das Gateway 100.

Das Gateway 100 des Funkortungssystems übermittelt wiederum die erfassten Positionen der Transponder 201-203 einschließlich der Objektidentifikatoren an die Überwachungs- und Steuerungseinheit 600. Dementsprechend ist das Überwachungs- und Steuerungseinheit 600 dafür konfiguriert, eine graphische Darstellung der übermittelten Positionen der Transponder 201-203 aufzubereiten bzw. anhand der übermittelten Positionen der Transponder 201-203 einschließlich der Objektidentifikatoren den Transpondern 201-203 im Überwachungs- und Steuerungseinheit 600 jeweils zugeordnete Ortsinformationen zu validieren.

Im vorliegenden Ausführungsbeispiel wird ein Versenden von Funknachrichten der Basisstationen 101-105 und der Transponder 201-203 mittels eines Zeitmultiplexverfahrens koordiniert, das jeder Basisstation 101-105 und jedem Transponder 201-203 einen festen Zeitabschnitt (time slot) zum Versenden der jeweiligen Funknachrichten zuteilt. Vorteilhafterweise wird das Versenden der Funknachrichten durch die Basisstationen 101-105 mittels des Zeitmultiplexverfahrens koordiniert. Als Zeitmultiplexverfahren wird vorzugsweise Time Division Multiple Access (TDMA) verwendet.

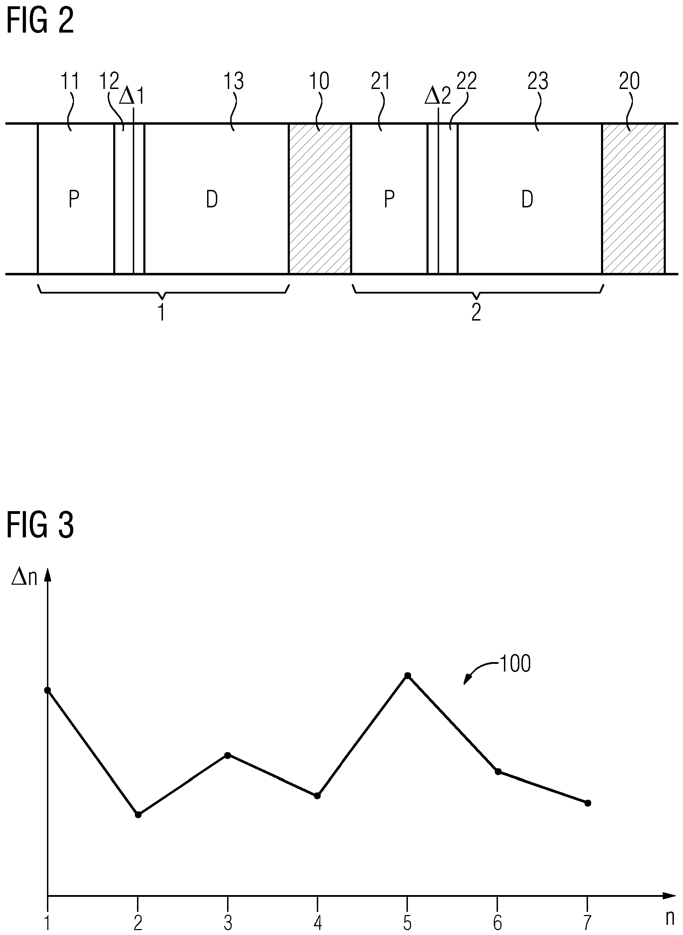

Entsprechend Figur 2 umfassen die Funknachrichten 1, 2 jeweils eine Präambel 11, 21 sowie einen Nutzdatenbereich 13, 23 und dazwischen einen Bereich 12, 22, innerhalb dessen Marke Δ1, Δ2, insbesondere ein R Marker entsprechend IEEE 802.15.4, für eine Koordination im Rahmen des Zeitmultiplexverfahrens gesendet wird. Ein Versenden der Funknachrichten 1, 2 durch die Transponder 201-203 wird dabei jeweils derart gesteuert, dass ein frühester Sendezeitpunkt der Marke Δ1, Δ2, die jeweils zwischen der Präambel 11, 21 und dem Nutzdatenbereich 13, 23 jeder Funknachricht 1, 2 vorgesehen ist, durch einen Startzeitpunkt des jeweiligen Zeitabschnitts (time slot) vorgegeben wird.

Entsprechend der vorliegenden Erfindung werden die Sendezeitpunkte der Funknachrichten 1, 2, insbesondere die Sendezeitpunkt der Marken Δ1, Δ2 innerhalb des jeweiligen Bereichs 12, 22, durch die Transponder 201-203 jeweils entsprechend einem aus einem Geheimnis abgeleiteten, durch die Basisstationen überprüfbaren Muster verzögert werden. Ein solches Muster 100 ist beispielhaft in Figur 3 dargestellt und gibt pro Zeitabschnitt n eine Verzögerung für ein Senden der Marken Δn und damit der Funknachrichten 1, 2 vor.

Zwischen zwei aufeinander folgenden Zeitabschnitten bzw. Funknachrichten 1, 2 wird jeweils ein Schutzintervall 10, 20 (guard interval) vorgesehen. Die Schutzintervalle 10, 20 geben eine obere Grenze für ein verzögertes Senden der Funknachrichten 1, 2 vor. Insbesondere werden die Sendezeitpunkte der Funknachrichten 1, 2 durch die Transponder 201-203 jeweils maximal um eine Länge eines Schutzintervalls 10, 20 verzögert.

Auf Basis des jeweiligen frühesten Sendezeitpunkts, des Musters 100 und einer abstandsbedingten Signallaufzeit überprüfen die die Basisstationen 101-105 bei einem Empfang einer Funknachricht 1, 2 eines Transponders 201-203 jeweils, ob ein Senden der Funknachricht 1, 2 entsprechend dem Muster 100 verzögert worden ist. Bei einer Abweichung vom Muster 100 wird jeweils eine Sicherheitsmaßnahme eingeleitet. Eine solche Sicherheitsmaßnahme kann insbesondere eine Signalisierung einer Warnung bzw. ein Verwerfen der jeweiligen Funknachricht umfassen.

## Patentansprüche

**1.** Verfahren zum Betrieb eines Funkortungssystems, bei dem
- Positionen von Transpondern (201-203) mittels mehrerer Basisstationen (101-105) des Funkortungssystems ermittelt werden, wobei die Basisstationen jeweils an einer vorgegebenen Position angeordnet sind,
- ein Versenden von Funknachrichten der Basisstationen und der Transponder mittels eines Zeitmultiplexverfahrens koordiniert wird, das jeder Basisstation und jedem Transponder einen festen Zeitabschnitt zum Versenden der jeweiligen Funknachrichten zuteilt,
- ein Versenden der Funknachrichten (1, 2) durch die Transponder jeweils derart gesteuert wird, dass ein frühester Sendezeitpunkt einer Marke (Δ1, Δ2), die jeweils zwischen einer Präambel (11, 21) und einem Nutzdatenbereich (13, 23) jeder Funknachricht vorgesehen ist, durch einen Startzeitpunkt des jeweiligen Zeitabschnitts vorgegeben wird,
- die Sendezeitpunkte der Funknachrichten durch die Transponder jeweils entsprechend einem aus einem Geheimnis abgeleiteten, durch die Basisstationen überprüfbaren Muster (100) verzögert werden,
- die Basisstationen auf Basis des jeweiligen frühesten Sendezeitpunkts, des Musters und einer abstandsbedingten Signallaufzeit bei einem Empfang einer Funknachricht eines Transponders jeweils überprüfen, ob ein Senden der Funknachricht entsprechend dem Muster verzögert worden ist,
- bei einer Abweichung vom Muster jeweils eine Sicherheitsmaßnahme eingeleitet wird.

**2.** Verfahren nach Anspruch 1,
bei dem das Versenden der Funknachrichten durch die Basisstationen mittels des Zeitmultiplexverfahrens koordiniert wird und bei dem als Zeitmultiplexverfahren Time Division Multiple Access verwendet wird.

**3.** Verfahren nach einem der Ansprüche 1 oder 2,
bei dem zwischen zwei aufeinander folgenden Zeitabschnitten jeweils ein Schutzintervall (10, 20) vorgesehen wird.

**4.** Verfahren nach Anspruch 3,
bei dem die Sendezeitpunkte der Funknachrichten (1, 2) durch die Transponder (201-203) jeweils maximal um eine Länge eines Schutzintervalls (10, 20) verzögert werden.

**5.** Verfahren nach einem der Ansprüche 1 bis 4,
bei dem die Positionen der Transponder (201-203) anhand von Funknachrichten-Empfangszeitdifferenzen oder anhand von Funknachrichten-Laufzeiten ermittelt werden.

**6.** Verfahren nach Anspruch 5,
bei dem die Positionen der Transponder entsprechend Time Difference of Arrival ermittelt werden und bei dem die Basisstationen untereinander zeitsynchronisiert sind.

**7.** Verfahren nach Anspruch 5,
bei dem die Positionen der Transponder entsprechend Two-way Ranging ermittelt werden.

**8.** Verfahren nach Anspruch 7,
bei dem anstelle der Positionen der Transponder jeweils eine Entfernung eines Transponders zu zumindest einer Basisstation ermittelt wird.

**8.** Verfahren nach einem der Ansprüche 1 bis 7,
bei dem die Sicherheitsmaßnahme eine Signalisierung einer Warnung und/oder ein Verwerfen der jeweiligen Funknachricht umfasst.

**9.** Verfahren nach einem der Ansprüche 1 bis 8,
bei dem das Funkortungssystem ein zumindest UWB-basiertes und/oder 2,4 GHz ISM-Band-basiertes Real-time Locating System ist.

**10.** Funkortungssystem zur Durchführung eines Verfahrens nach einem der Ansprüche 1 bis 9, wobei das Funkortungssystem
- mehrere Transponder sowie mehrere jeweils an einer vorgegebenen Position angeordnete Basisstationen (101-103) zur Ermittlung von Positionen der Transponder umfasst und
- dafür ausgestaltet ist, ein Versenden von Funknachrichten der Basisstationen und der Transponder mittels eines Zeitmultiplexverfahrens zu koordinieren, wobei das Zeitmultiplexverfahren zur Zuteilung jeweils eines festen Zeitabschnitts an jede Basisstation und jeden Transponder zum Versenden der jeweiligen Funknachrichten vorgesehen ist,
- wobei die Transponder dafür ausgestaltet sind, ein Versenden der Funknachrichten jeweils derart zu steuern, dass ein frühester Sendezeitpunkt einer Marke, die jeweils zwischen einer Präambel und einem Nutzdatenbereich jeder Funknachricht vorgesehen ist, durch einen Startzeitpunkt des jeweiligen Zeitabschnitts vorgegeben wird,
- wobei die Transponder ferner dafür ausgestaltet sind, die Sendezeitpunkte der Funknachrichten jeweils entsprechend einem aus einem Geheimnis abgeleiteten, durch die Basisstationen überprüfbaren Muster zu verzögern,
- wobei die Basisstationen dafür ausgestaltet sind, auf Basis des jeweiligen frühesten Sendezeitpunkts, des Musters und einer abstandsbedingten Signallaufzeit bei einem Empfang einer Funknachricht eines Transponders jeweils zu überprüfen, ob ein Senden der Funknachricht entsprechend dem Muster verzögert worden ist,
- wobei das Funkortungssystem ferner dafür ausgestaltet ist, bei einer Abweichung vom Muster jeweils eine Sicherheitsmaßnahme einzuleiten.

**11.** Basisstation für ein Funkortungssystem nach Anspruch 10, wobei die Basisstation dafür ausgestaltet ist,
- auf Basis eines jeweiligen frühesten Sendezeitpunkts einer Funknachricht eines Transponders, eines aus einem Geheimnis abgeleiteten Musters, entsprechend dem Sendezeitpunkte von Funknachrichten von Transpondern jeweils verzögert sind, und einer abstandsbedingten Signallaufzeit bei einem Empfang einer Funknachricht eines Transponders jeweils zu überprüfen, ob ein Senden der Funknachricht entsprechend dem Muster verzögert worden ist.

**12.** Transponder für ein Funkortungssystem nach Anspruch 10, wobei der Transponder dafür ausgestaltet ist,
- ein Versenden von Funknachrichten derart zu steuern, dass ein frühester Sendezeitpunkt einer Marke, die jeweils zwischen einer Präambel und einem Nutzdatenbereich jeder Funknachricht vorgesehen ist, durch einen Startzeitpunkt eines festen Zeitabschnitts, der dem Transponder zum Versenden von Funknachrichten mittels eines Zeitmultiplexverfahrens zugeteilt ist, vorgegeben wird,
- die Sendezeitpunkte der Funknachrichten jeweils entsprechend einem aus einem Geheimnis abgeleiteten Muster zu verzögern.
